(19) Europäisches Patentamt
European Patent Office
Office européen des brevets

(11) **EP 4 672 565 A1**

(12) **EUROPEAN PATENT APPLICATION**
published in accordance with Art. 153(4) EPC

(43) Date of publication:
**31.12.2025 Bulletin 2026/01**

(21) Application number: **24760073.7**

(22) Date of filing: **01.02.2024**

(51) International Patent Classification (IPC):
**H02K 3/52** *(2006.01)* **H02K 3/487** *(2006.01)*

(52) Cooperative Patent Classification (CPC):
**H02K 3/487; H02K 3/52**

(86) International application number:
**PCT/JP2024/003298**

(87) International publication number:
**WO 2024/176766 (29.08.2024 Gazette 2024/35)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **21.02.2023 JP 2023025394**

(71) Applicant: **DENSO CORPORATION**
**Kariya-city, Aichi 448-8661 (JP)**

(72) Inventors:
• **KANEDA, Yoshimasa**
**Kariya-city, Aichi 448-8661 (JP)**
• **SEGUCHI, Masahiro**
**Kariya-city, Aichi 448-8661 (JP)**
• **IGUCHI, Tomohiro**
**Kariya-city, Aichi 448-8661 (JP)**
• **TSUCHIYA, Hiroyuki**
**Kariya-city, Aichi 448-8661 (JP)**

(74) Representative: **Kuhnen & Wacker**
**Patent- und Rechtsanwaltsbüro PartG mbB**
**Prinz-Ludwig-Straße 40A**
**85354 Freising (DE)**

(54) **WINDING FIELD ROTOR**

(57) A rotor (60), which is applicable to a wound-field rotating electric machine (40), includes: a rotor core (61) having main pole portions (62) provided respectively for magnetic poles aligned in a circumferential direction, each of the main pole portions protruding in a radial direction; and a field coil (70) wound on the main pole portions of the rotor core. Moreover, the field coil has a coil end part (CE) located axially outside the rotor core. An annular member (103, 104, 182) is provided, on a radially outer side of the coil end part, in such a manner as to surround the coil end part.

## FIG.7

EP 4 672 565 A1

**Description**

[CROSS-REFERENCE TO RELATED APPLICATION]

The present application is based on Japanese Patent Application No. 2023-025394, filed on February 21, 2023, the contents of which are incorporated by reference into the present application.

[TECHNICAL FIELD]

The disclosure in this description relates to wound-field rotors.

[BACKGROUND ART]

In wound-field rotating electric machines, a rotor (i.e., a wound-field rotor) includes a rotor core having a plurality of main pole portions (or magnetic salient pole portions) provided respectively for magnetic poles aligned in a circumferential direction, and a field coil wound on the main pole portions. Moreover, there is disclosed, for example in Patent Document 1, a configuration of a wound-field rotor in which: holding members are provided between circumferentially adjacent main pole portions of the rotor core in such a manner as to be supported by protruding end portions of the main pole portions; and the field coil is restricted by the holding members from moving radially outward.

[PRIOR ART LITERATURE]

[PATENT LITERATURE]

[Patent Document 1]: Japanese Patent No. JP 5062517 B2

[SUMMARY OF THE INVENTION]

However, in a wound-field rotor, under the centrifugal force acting on the field coil during rotation of the rotor, movement of the field coil may occur not only at a coil side part of the field coil which radially faces the rotor core, but also at coil end parts of the filed coil. In this regard, there is room for technical improvement.

The present disclosure has been accomplished in view of the above circumstances. It is, therefore, an object of the present disclosure to provide a wound-field rotor capable of properly holding a field coil.

According to the present disclosure, there is provided a wound-field rotor applicable to a wound-field rotating electric machine, the wound-field rotor comprising:

a rotor core having main pole portions provided respectively for magnetic poles aligned in a circumferential direction, each of the main pole portions protruding in a radial direction; and

a field coil wound on the main pole portions of the rotor core,

wherein

the field coil has a coil end part located axially outside the rotor core, and

an annular member is provided, on a radially outer side of the coil end part, in such a manner as to surround the coil end part.

In the wound-field rotor provided according to the present disclosure, the field coil is assembled to the rotor core in such a manner as to be wound on the main pole portions. Moreover, the annular member is provided on the radially outer side of the coil end part of the field coil. With this configuration, even when the centrifugal force is generated in the field coil with rotation of the wound-field rotor, it is still possible to suppress displacement of the coil end part of the field coil by the annular member. As a result, the field coil can be held in a proper state in the wound-field rotor.

[BRIEF DESCRIPTION OF THE DRAWINGS]

The above-described object, other objects, features and beneficial advantages according to the present disclosure will become more apparent from the following detailed explanation with reference to the accompanying drawings. In the drawings:

FIG. 1 is an overall configuration diagram of a control system for a rotating electric machine;
FIG. 2 is a diagram illustrating an inverter and its peripheral configuration;
FIG. 3 is a transverse cross-sectional view of both a rotor and a stator;
FIG. 4 is a diagram illustrating an electric circuit formed in the rotor;
FIG. 5 is a diagram illustrating the waveforms of fundamental current and harmonic current;
FIG. 6 is a perspective view illustrating the overall configuration of the rotor;
FIG. 7 is an exploded perspective view of the rotor;
FIG. 8 is a longitudinal cross-sectional view of the rotor;
FIG. 9 is a perspective view of a rotor main body, showing a coil unit in a disassembled manner;
FIGS. 10A and 10B are transverse cross-sectional views of the rotor main body;
FIGS. 11A and 11B are perspective views illustrating a configuration example of coil bodies;
FIG. 12 is a perspective view of a circuit module;
FIG. 13 is a perspective view showing a component holder and electrical components of the circuit module in a disassembled manner;
FIGS. 14A and 14B are perspective views illustrating configurations of coil end covers;
FIGS. 15A and 15B are cross-sectional views showing, in a magnified manner, configurations around coil end parts;

FIGS. 16A, 16B and 16C are front views illustrating configuration examples of a coil end cover on which balance adjustment has been performed;

FIGS. 17A and 17B are front views of coil end covers;

FIG. 18 is a diagram illustrating the configuration of a transverse cross section of a rotor;

FIG. 19 is a front view of a rotor main body according to a modification;

FIG. 20 is a diagram illustrating the configuration of a coil end cover according to a modification;

FIGS. 21A and 21B are diagrams illustrating the configurations of coil end covers according to modifications; and

FIG. 22 is a diagram illustrating the configuration of a rotor core according to a modification.

[EMBODIMENTS FOR CARRYING OUT THE INVENTION]

Hereinafter, an embodiment embodying a rotating electric machine according to the present disclosure will be described with reference to the drawings. The rotating electric machine may be used, for example, as a driving power source in an electrified vehicle such as an electric vehicle or a hybrid vehicle.

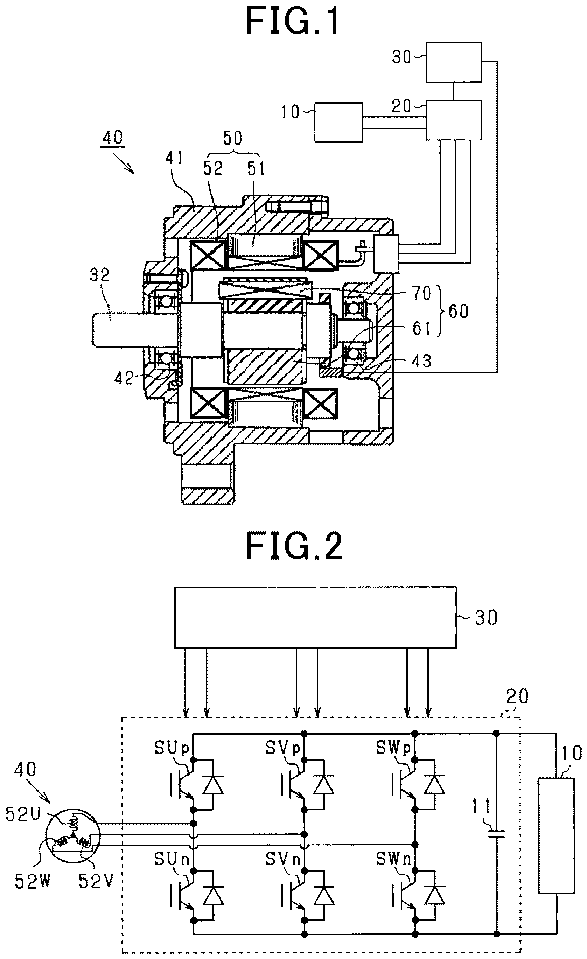

First, a control system, which includes the rotating electric machine, will be described with reference to FIG. 1. The control system includes a DC power source 10, an inverter 20 and a control device 30, in addition to the rotating electric machine 40. The rotating electric machine 40 is configured as a wound-field synchronous rotating electric machine. In addition, the rotating electric machine 40, the inverter 20 and the control device 30 may be either integrated into a single electromechanical drive apparatus or configured as individual components.

The rotating electric machine 40 includes a housing 41, and a stator 50 and a rotor 60 both of which are accommodated in the housing 41. In the present embodiment, the rotating electric machine 40 is of an inner rotor type such that the rotor 60 is arranged radially inside the stator 50. In addition, the rotor 60 corresponds to a "wound-field rotor".

The stator 50 includes a stator core 51 and a stator coil 52 wound on the stator core 51. The stator coil 52 may be formed of, for example, copper wires. The stator coil 52 includes a U-phase winding 52U, a V-phase winding 52V and a W-phase winding 52W, which are arranged in such a manner as to be offset from each other by 120° in electrical angle.

The rotor 60 includes a rotor core 61 and a field coil 70. The field coil 70 may be formed of, for example, aluminum wires which have a low specific gravity and can be easily shaped. It should be noted that the field coil 70 is not limited to aluminum wires, but may alternatively be formed of, for example, copper wires or CNT (i.e., carbon nanotube) wires. The rotor core 61 has a center hole in which a rotating shaft 32 is fitted. The rotating shaft 32 is rotatably supported by the housing 41 via a pair of bearings 42 and 43.

As shown in FIG. 2, the inverter 20 includes: a serially-connected U-phase switch pair consisting of a U-phase upper-arm switch SUp and a U-phase lower-arm switch Sun; a serially-connected V-phase switch pair consisting of a V-phase upper-arm switch SVp and a V-phase lower-arm switch SVn; and a serially-connected W-phase switch pair consisting of a W-phase upper-arm switch SWp and a W-phase lower-arm switch SWn. To a junction point between the U-phase upper-arm and lower-arm switches SUp and SUn, there is connected a first end of the U-phase winding 52U. To a junction point between the V-phase upper-arm and lower-arm switches SVp and SVn, there is connected a first end of the V-phase winding 52V. To a junction point between the W-phase upper-arm and lower-arm switches SWp and SWn, there is connected a first end of the W-phase winding 52W. On the other hand, a second end of the U-phase winding 52U, a second end of the V-phase winding 52V and a second end of the W-phase winding 52W are connected together at a neutral point. That is, in the present embodiment, the U-phase, V-phase and W-phase windings 52U, 52V and 52W of the stator coil 52 are star-connected. It should be noted that the U-phase, V-phase and W-phase windings 52U, 52V and 52W of the stator coil 52 may alternatively be delta-connected. Moreover, in the present embodiment, each of the switches SUp, SVp, SWp, SUn, SVn and SWn is implemented by an IGBT. In addition, each of the switches SUp, SVp, SWp, SUn, SVn and SWn has a freewheeling diode connected in antiparallel thereto.

Each of the U-phase, V-phase and W-phase upper-arm switches SUp, SVp and SWp has its collector connected to a positive terminal of the DC power source 10. Each of the U-phase, V-phase and W-phase lower-arm switches SUn, SVn and SWn has its emitter connected to a negative terminal of the DC power source 10. In addition, a smoothing capacitor 11 is connected in parallel with the DC power source 10.

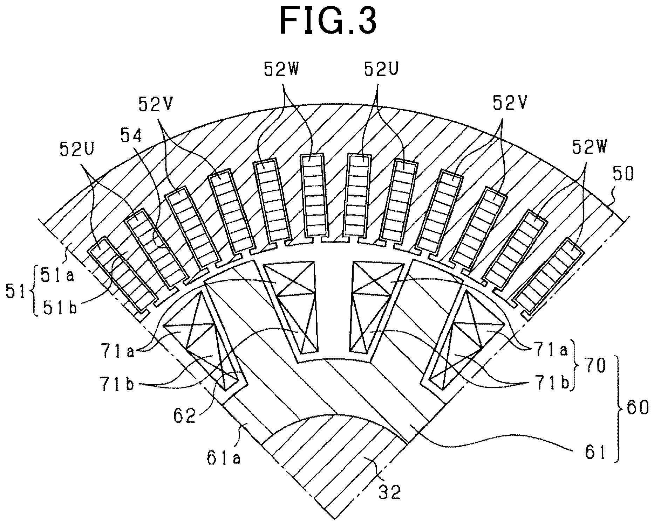

Next, the stator 50 and the rotor 60 will be described in detail with reference to FIG. 3.

In the rotating electric machine 40, both the stator 50 and the rotor 60 are arranged coaxially with the rotating shaft 32. Hereinafter, the direction in which a central axis of the rotating shaft 32 extends will be referred to as the axial direction; the directions of extending radially from the central axis of the rotating shaft 32 will be referred to as radial directions; and the direction of extending along a circle whose center is on the central axis of the rotating shaft 32 will be referred to as the circumferential direction.

The stator core 51 is formed of a soft-magnetic material. For example, the stator core 51 may be formed by laminating steel sheets in the axial direction. The stator core 51 has an annular back yoke 51a and a plurality of teeth 51b each protruding radially inward from the back yoke 51a. Between circumferentially adjacent teeth 51b, there are formed a plurality of slots 54 in alignment with each other in the circumferential direction. The stator coil 52 is formed by having the U-phase, V-phase and W-phase windings 52U, 52V and 52W accommodated in the slots 54 in a predetermined order. The stator 50 may have, for example, a segment coil structure in which a plurality of electrical conductor segments are employed. It should be noted that the structure of the stator coil 52 may be arbitrarily selected.

The rotor core 61 is also formed of a soft-magnetic material. For example, the rotor core 61 may be formed by laminating steel sheets in the axial direction. The rotor core 61 has a cylindrical portion 61a and a plurality of main pole portions 62 protruding radially outward from the cylindrical portion 61a. The field coil 70 is wound on the main pole portions 62 in a concentrated winding manner. More particularly, in the present embodiment, the rotor core 61 has eight main pole portions 62 formed at equal intervals in the circumferential direction.

The field coil 70 includes a first coil section 71a and a second coil section 71b. On each of the main pole portions 62, the first coil section 71a is wound on the radially outer side while the second coil section 71b is wound on the radially inner side. Moreover, on each of the main pole portions 62, the first and second coil sections 71a and 71b are wound in the same direction. Furthermore, for each circumferentially-adjacent pair of the main pole portions 62, the winding direction of the first and second coil sections 71a and 71b on one of the pair of the main pole portions 62 is opposite to the winding direction of the first and second coil sections 71a and 71b on the other of the pair of the main pole portions 62. Consequently, the magnetization directions of each circumferentially-adjacent pair of the main pole portions 62 become opposite to each other. In the rotor 60, by the main pole portions 62 of the rotor core 61 and the field coil 70 wound on the main pole portions 62, a plurality of magnetic poles (or field poles) are formed which are aligned with each other in the circumferential direction.

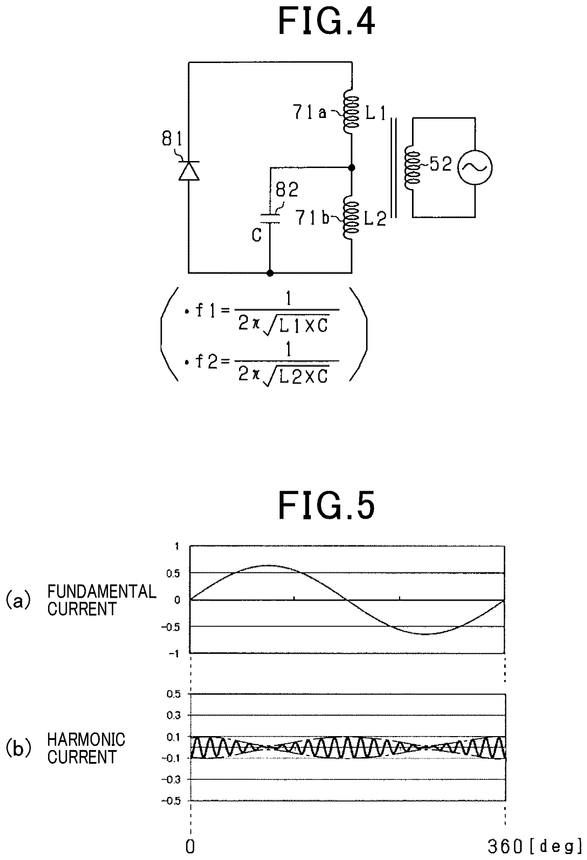

FIG. 4 shows an electric circuit which is formed in the rotor 60 and includes the first and second coil sections 71a and 71b wound on the main pole portions 62. The first coil section 71a and the second coil section 71b are connected in series with each other. A diode 81, which serves as a rectifying element, is connected between two ends of the series connection consisting of the first and second coil sections 71a and 71b. Specifically, a first end of the first coil section 71a is connected with the cathode of the diode 81; a second end of the first coil section 71a is connected with a first end of the second coil section 71b; and a second end of the second coil section 71b is connected with the anode of the diode 81. Moreover, capacitors 82 are connected in parallel with the second coil section 71b. It should be noted that in FIG. 4, L1 represents the inductance of the first coil section 71a; L2 represents the inductance of the second coil section 71b; and C represents the capacitance of the capacitors 82.

In the present embodiment, the first coil section 71a, the capacitors 82 and the diode 81 together form a series resonant circuit; and the second coil section 71b and the capacitors 82 together form a parallel resonant circuit. Hereinafter, the resonance frequency of the series resonant circuit will be referred to as the first resonance frequency f1; and the resonance frequency of the parallel resonant circuit will be referred to as the second resonance frequency f2. The first and second resonance frequencies f1 and f2 can be respectively expressed by the following equations (1) and (2).

$$f1 = 1 / (2\pi\sqrt{(L1 \times C)}) \qquad (1)$$

$$f2 = 1 / (2\pi\sqrt{(L2 \times C)}) \qquad (2)$$

Upon harmonic current flowing through the stator coil 52, main magnetic flux, which flows through a magnetic circuit that includes the stator core 51 and the rotor core 61, varies due to harmonics. With the variation in the main magnetic flux, voltages are induced respectively in the first and second coil sections 71a and 71b, thereby inducing electric currents respectively in the first and second coil sections 71a and 71b. Moreover, when the voltages induced respectively in the first and second coil sections 71a and 71b are of the same polarity, the electric currents induced respectively in the first and second coil sections 71a and 71b are not cancelled by each other, thus increasing the total electric current induced in the field coil 70. Furthermore, the electric currents induced respectively in the first and second coil sections 71a and 71b are rectified by the diode 81 to flow in one direction, namely the rectification direction. Consequently, field current flows in the field coil 70 in the rectification direction, thereby exciting the field coil 70.

The control device 30 is mainly composed of a microcomputer (corresponding to a computer) which includes a CPU. The control device 30 generates drive signals for turning on/off the switches SUp, SVp, SWp, SUn, SVn and SWn of the inverter 20. Specifically, in order to convert DC power outputted from the DC power source 10 into AC power and supply the resultant AC power to the U-phase, V-phase and W-phase windings 52U, 52V and 52W, the control device 30 generates drive signals for turning on/off the switches SUp, SVp, SWp, SUn, SVn and SWn and outputs the generated drive signals to the gates of the switches SUp, SVp, SWp, SUn, SVn and SWn.

In the present embodiment, the control device 30 turns on/off the switches SUp, SVp, SWp, SUn, SVn and SWn so as to apply resultant current, which is the resultant of fundamental current and harmonic current, to each of the U-phase, V-phase and W-phase windings 52U, 52V and 52W. The fundamental current is electric current mainly for causing the rotating electric machine 40 to generate torque. On the other hand, the harmonic current is electric current mainly for exciting the field coil 70. In addition, U-phase, V-phase and W-phase currents, which are the resultant currents flowing respectively through the U-phase, V-phase and W-phase windings 52U, 52V and 52W, are offset in phase from each other by 120° in electrical angle.

As shown in FIG. 5, the period of the envelope of the harmonic current is set to be 1/2 of the period of the fundamental current. The envelope of the harmonic current is shown by a one-dot chain line in FIG. 5(b). It should be noted that the vertical axis in FIG. 5 is graduated to indicate the relationship in magnitude between the waveforms of the fundamental current and the harmonic current shown in FIG. 5(a), (b). Moreover, as shown in FIG. 5, the timings at which the envelope of the harmonic current reaches its peak values are offset from the timings at which the fundamental current reaches its peak values. More specifically, the timings at which the envelope of the harmonic current reaches its peak values coincide with the timings at which the fundamental current reaches its center of variation (i.e., 0).

In addition, the timings at which the envelope of the harmonic current reaches its peak values may alternatively be set to coincide with, for example, the timings at which the fundamental current reaches its peak values.

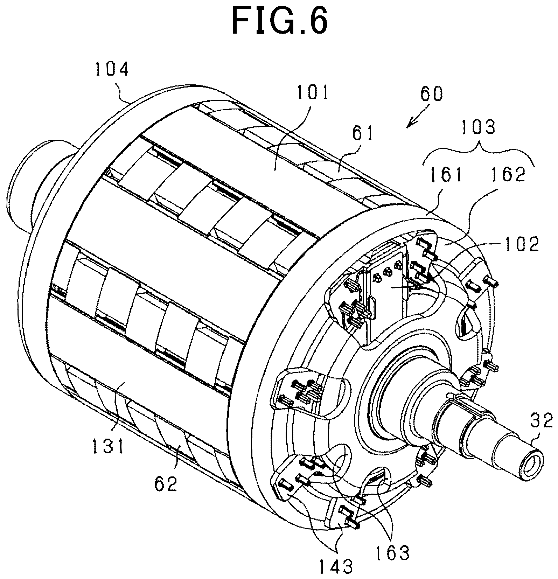

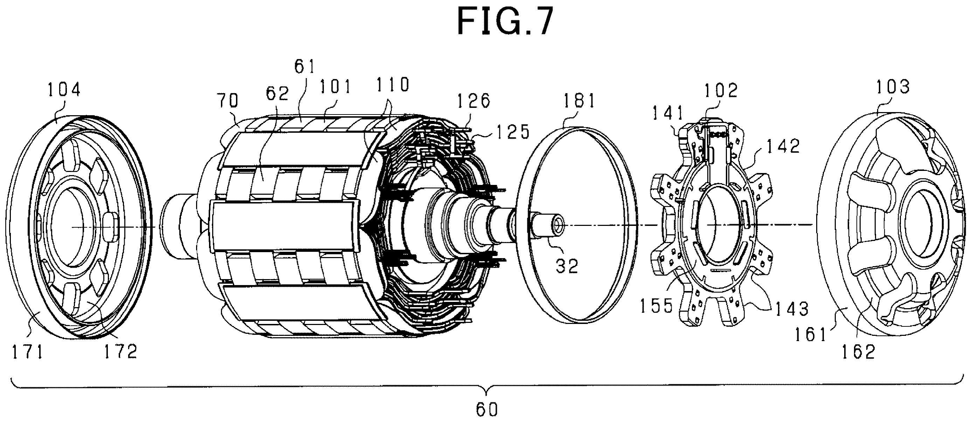

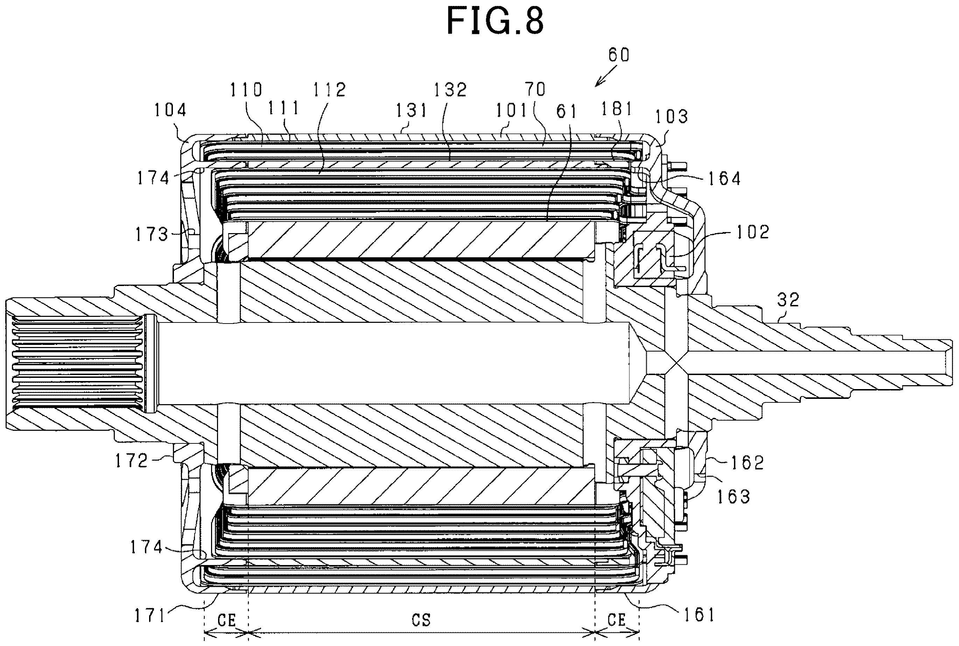

Next, the configuration of the rotor 60 will be described in more detail. FIG. 6 is a perspective view illustrating the overall configuration of the rotor 60. FIG. 7 is an exploded perspective view of the rotor 60. FIG. 8 is a longitudinal cross-sectional view of the rotor 60.

The rotor 60 mainly includes a rotor main body 101, a circuit module 102 provided on a first axial side of the rotor main body 101, and coil end covers 103 and 104 provided as annular members respectively on the first axial side and a second axial side of the rotor main body 101. The rotor main body 101 includes the rotor core 61 and the field coil 70 as described above with reference to FIG. 3, with the rotating shaft 32 fitted in the center hole of the rotor core 61. The field coil 70 is composed of a plurality of coil units 110 arranged in alignment with each other in the circumferential direction. The circuit module 102 is fixed to the rotating shaft 32 that is inserted through a hollow part of the circuit module 102. As shown in FIG. 8, that part of the field coil 70 (i.e., the coil units 110) which radially faces the rotor core 61 constitutes a coil side part CS; and those parts of the field coil 70 which are located axially outside the rotor core 61 constitute coil end parts CE.

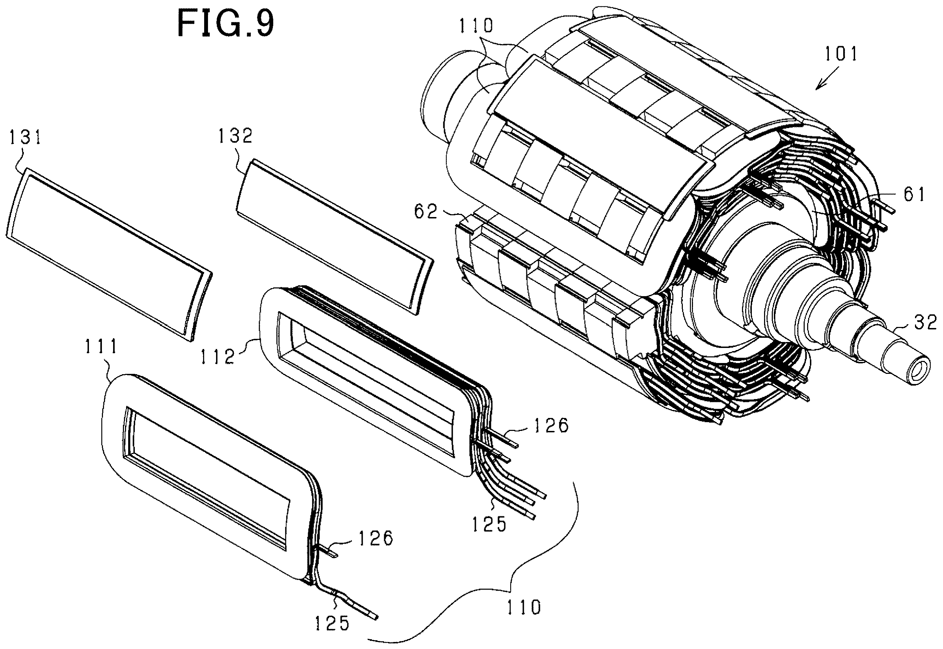

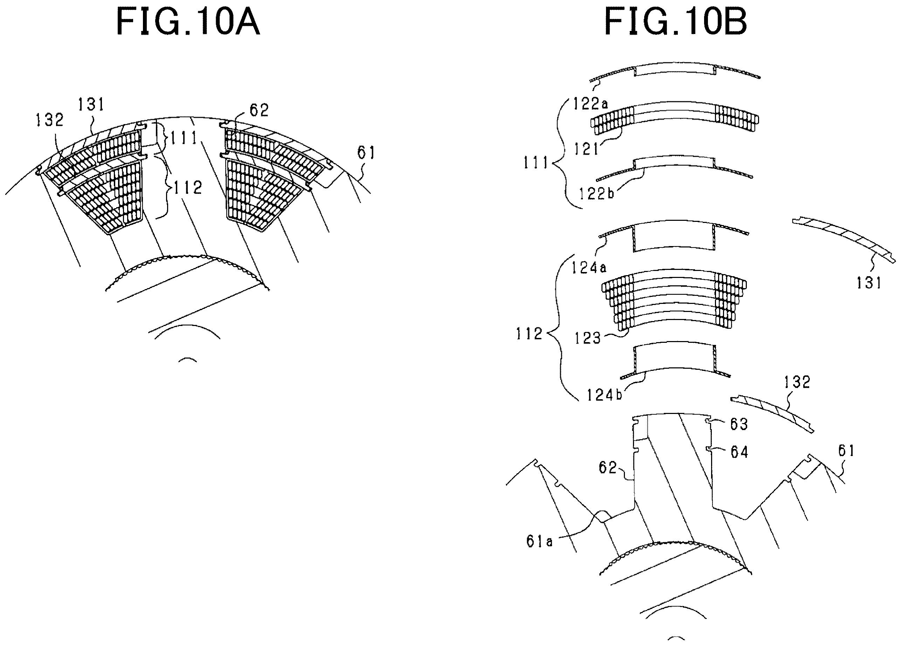

Next, the configuration of the rotor main body 101 will be described in detail with reference to FIGS. 9, 10A and 10B. FIG. 9 is a perspective view of the rotor main body 101, showing one of the coil units 110 in a disassembled manner. FIGS. 10A and 10B are transverse cross-sectional views of the rotor main body 101. Specifically, FIG. 10A shows the rotor main body 101 with the coil units 110 in an assembled state, whereas FIG.

10B shows the rotor main body 101 with the coil units 110 in a disassembled state.

The rotor main body 101 has the coil units 110 provided respectively for the magnetic poles of the rotor 60. Each of the coil units 110 is formed in a ring shape whose longitudinal direction coincides with the axial direction. Moreover, each of the coil units 110 is assembled to the rotor core 61, with a corresponding one of the main pole portions 62 of the rotor core 61 inserted into a hollow part thereof.

Each of the coil units 110 includes a first coil module 111 and a second coil module 112 which are located respectively on the radially outer side and the radially inner side when mounted to the corresponding main pole portion 62. The first coil module 111 corresponds to the first coil section 71a, whereas the second coil module 112 corresponds to the second coil section 71b.

As shown in FIG. 10B, the first coil module 111 has: a ring-shaped coil body 121 formed by winding an electrical conductor wire, which is a flat wire, multiply in the circumferential and radial directions; and thin plate-shaped insulators 122a and 122b provided integrally with the coil body 121. The insulator 122a has both a portion extending in the circumferential direction and covering a radially outer peripheral portion of the coil body 121 and a portion extending in the radial direction and covering a hollow portion of the coil body 121. On the other hand, the insulator 122b has both a portion extending in the circumferential direction and covering a radially inner peripheral portion of the coil body 121 and a portion extending in the radial direction and covering the hollow portion of the coil body 121. That is, all of the radially outer peripheral portion, the radially inner peripheral portion and the hollow portion of the coil body 121 are electrically insulated by being covered with the insulators 122a and 122b.

The second coil module 112 has: a ring-shaped coil body 123 formed by winding an electrical conductor wire, which is a flat wire, multiply in the circumferential and radial directions; and thin plate-shaped insulators 124a and 124b provided integrally with the coil body 123. The insulator 124a has both a portion extending in the circumferential direction and covering a radially outer peripheral portion of the coil body 123 and a portion extending in the radial direction and covering a hollow portion of the coil body 123. On the other hand, the insulator 124b has both a portion extending in the circumferential direction and covering a radially inner peripheral portion of the coil body 123 and a portion extending in the radial direction and covering the hollow portion of the coil body 123. That is, all of the radially outer peripheral portion, the radially inner peripheral portion and the hollow portion of the coil body 123 are electrically insulated by being covered with the insulators 124a and 124b.

Each of the flat wires used for forming the coil bodies 121 and 123 has a substantially right-angled quadrangular cross-sectional shape (more particularly, a substantially rectangular cross-sectional shape). Moreover, each of the flat wires has a conductor part formed of aluminum or the like and an insulating layer covering the conductor part. It should be noted that round wires having a circular cross-sectional shape may alternatively be used as the electrical conductor wires for forming the coil bodies 121 and 123.

The coil body 121 is configured as a α-wound air-core coil, and has two layers of windings radially aligned and formed integrally with each other. The coil body 121 may be regarded as a two-layered unit coil having a radially inner layer and a radially outer layer. In the coil body 121, conductor wire end portions 125 and 126 are led out in the axial direction respectively from the inner layer side and the outer layer side.

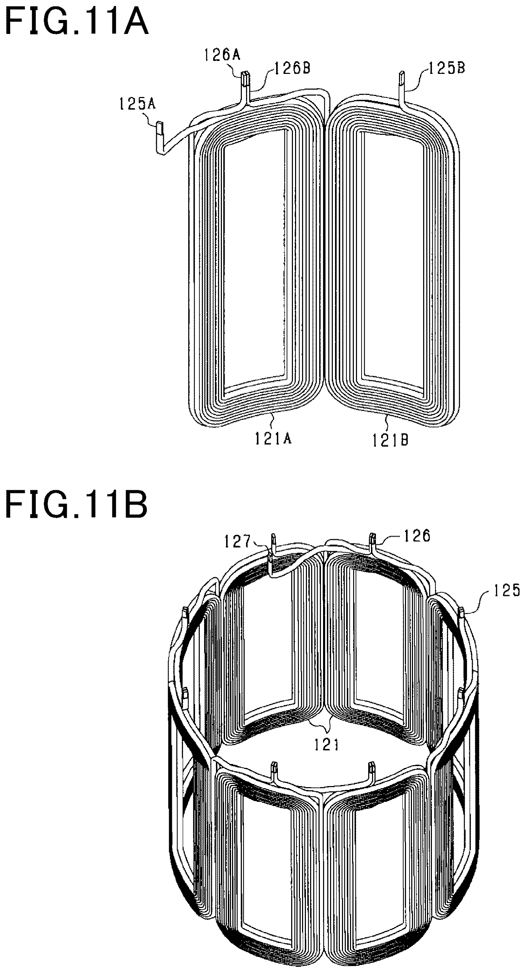

FIGS. 11A and 11B are perspective views illustrating a configuration example of the coil bodies 121 of the first coil modules 111. Specifically, FIG. 11A shows two coil bodies 121 aligned in the circumferential direction and connected with each other. The two coil bodies 121 shown in FIG. 11A are of different types differing in the shapes of the conductor wire end portions 125 and 126. Hereinafter, one of the two different types of the coil bodies 121 will be referred to as the "coil body 121A" and the other will be referred to as the "coil body 121B".

The coil body 121A has its conductor wire end portion 125A extending from a circling portion thereof on the radially inner side (i.e., at the radially inner layer), and its conductor wire end portion 126A extending from a circling portion thereof on the radially outer side (i.e., at the radially outer layer). Similarly, the coil body 121B has its conductor wire end portion 125B extending from a circling portion thereof on the radially inner side (i.e., at the radially inner layer), and its conductor wire end portion 126B extending from a circling portion thereof on the radially outer side (i.e., at the radially outer layer). Moreover, in each of the coil bodies 121A and 121B, one of the conductor wire end portions 125 and 126 of the coil body 121 extends in the axial direction from a circling portion of the coil body 121 whereas the other of the conductor wire end portions 125 and 126 of the coil body 121 extends in the axial direction from a circling portion of another coil body 121 adjacent to the coil body 121 in the circumferential direction. The coil body 121A is configured so that the conductor wire end portion 125A extending from the circling portion of the coil body 121A on the radially inner side extends to another coil body 121 adjacent to the coil body 121A in the circumferential direction. In contrast, the coil body 121B is configured so that the conductor wire end portion 126B extending from the circling portion of the coil body 121B on the radially outer side extends to another coil body 121 adjacent to the coil body 121B in the circumferential direction. Furthermore, in the coil bodies 121A and 121B, the winding directions of the electrical conductor wires at the radially inner and radially outer layers are the same.

The coil bodies 121 aligned in the circumferential direction are connected in series with one another in the circumferential direction by joining the conductor wire end portions 125 and 126 of each circumferentially-adjacent pair of the coil bodies 121 by welding or the like. The first coil section 71a of the field coil 70 is formed by serially connecting the coil bodies 121 aligned in the circumferential direction. Specifically, for the coil bodies 121 aligned in the circumferential direction, each corresponding pair of the conductor wire end portions 125 of the coil bodies 121, which are located on the radially inner side, are joined to each other; and each corresponding pair of the conductor wire end portions 126 of the coil bodies 121, which are located on the radially outer side, are joined to each other. Consequently, when electric current is applied to the first coil section 71a of the field coil 70, in each circumferentially-adjacent pair of the coil bodies 121, the electric current flows in opposite directions to each other.

FIG. 11B shows all the coil bodies 121 aligned in the circumferential direction which are in a state of having been connected and arranged in an annular shape. In the coil bodies 121, the joining between the conductor wire end portions 125 at the radially inner layers and the joining between the conductor wire end portions 126 at the radially outer layers are performed alternately in the circumferential direction. In addition, the conductor wire end portion at the end of making one lap around the rotor constitutes a bridging portion 127 that is connected to the coil body of another coil module (more particularly, the coil body 123 of a second coil module 112); the bridging portion 127 extends in such a manner as to be offset radially inward.

As shown in FIGS. 10A and 10B, the first coil module 111 is configured to have the coil body 121 provided in a single stage in the radial direction. In contrast, the second coil module 112 is configured to have the coil body 123 in which the same α-wound air-core coils as the coil body 121 are provided in three stages in the radial direction. The first coil section 71a of the field coil 70 is formed by serially connecting air-core coils (i.e., the coil bodies 121) making one lap around the rotor, whereas the second coil section 71b of the field coil 70 is formed by serially connecting air-core coils making three laps around the rotor.

The coil bodies 121 and 123 of the coil modules 111 and 112 differ in the number of windings in the circumferential direction (in other words, differ in the number of flat wires aligned in the circumferential direction) such that the number of windings is greater on the radially outer side than on the radially inner side. Consequently, it becomes possible to improve the space factor of the field coil 70. It should be noted that ignoring the space factor, all the numbers of windings in the circumferential direction may be set to be equal in the coil bodies 121 and 123 aligned in the radial direction.

In each of the coil bodies 121 and 123 of the coil modules 111 and 112, the number of stages of α-wound air-core coils in the radial direction may be changed arbitrarily. For example, the first coil module 111 may alternatively have two or more stages of α-wound air-core coils provided therein; and the second coil module 112 may alternatively have two or less stages or four or more stages of α-wound air-core coils provided therein.

The rotor main body 101 also includes holding plates 131 and 132 that hold, after the first and second coil modules 111 and 112 of the coil units 110 are assembled to the corresponding main pole portions 62, the assembled state of the coil modules 111 and 112. The holding plates 131 are mounted radially outside the first coil modules 111, whereas the holding plates 132 are mounted between the first coil modules 111 and the second coil modules 112 in the radial direction.

Specifically, as shown in FIGS. 10A and 10B, each of the main pole portions 62 of the rotor core 61 has recesses 63 formed in a radial end portion thereof and recesses 64 formed in a radial intermediate portion thereof. Moreover, each of the recesses 63 and 64 is formed to extend in the axial direction. Each of the holding plates 131 and 132 is formed of a plate material having an arc-shaped cross section. Each of the holding plates 131 is assembled to the rotor core 61 by having two circumferential end portions thereof inserted respectively into two recesses 63 of a circumferentially-adjacent pair of the main pole portions 62. Similarly, each of the holding plates 132 is assembled to the rotor core 61 by having two circumferential end portions thereof inserted respectively into two recesses 64 of a circumferentially-adjacent pair of the main pole portions 62. The holding plates 131 and 132 may be formed of a nonmagnetic material such as aluminum. Alternatively, the holding plates 131 and 132 may be formed of a synthetic resin.

After the coil modules 111 and 112 and the holding plates 131 and 132 are assembled to the rotor core 61, the second coil modules 112 are held in a state of being accommodated respectively in spaces formed between the cylindrical portion 61a of the rotor core 61 and the holding plates 132 in the radial direction; and the first coil modules 111 are held in a state of being accommodated respectively in spaces formed between the holding plates 131 and the holding plates 132 in the radial direction. With the holding plates 131 and 132, it becomes possible to hold the coil side part CS of the field coil 70 which radially faces the rotor core 61.

In addition, each of the holding plates 131 corresponds to a "holding member" that is located between a circumferentially-adjacent pair of the main pole portions 62 of the rotor core 61 and holds the coil side part CS of the first coil section 71a of the field coil 70 from the radially outer side. On the other hand, each of the holding plates 132 corresponds to an "intermediate holding member" that is located between a circumferentially-adjacent pair of the main pole portions 62 of the rotor core 61 and holds the coil side part CS of the second coil section 71b of the field coil 70 from the radially outer side.

As described above, in each of the first coil modules 111 of the coil units 110, the radially outer and radially inner peripheral portions of the coil body 121 are electrically insulated by being covered with the insulators 122a and 122b. Similarly, in each of the second coil modules 112 of the coil units 110, the radially outer and radially inner peripheral portions of the coil body 123 are electrically insulated by being covered with the insulators 124a and 124b. Consequently, resin covering layers are formed between the coil bodies 121 and 123 and the holding plates 131 and 132.

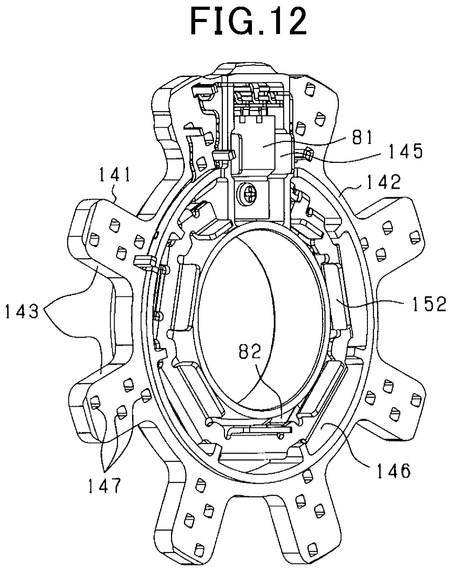

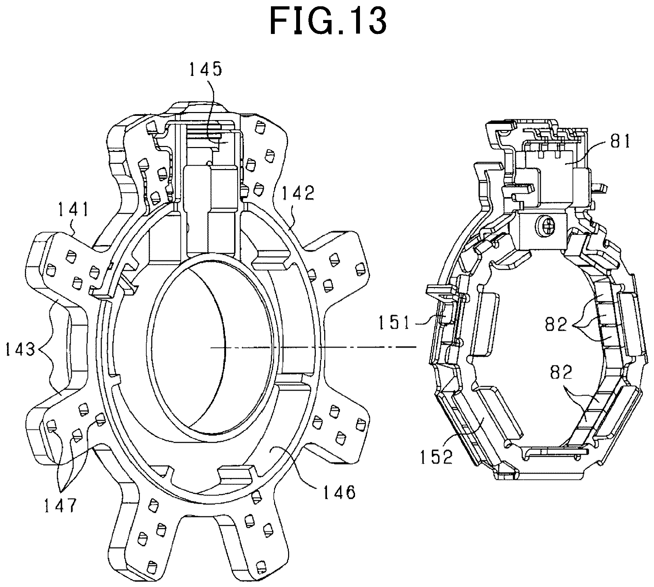

Next, the circuit module 102 will be described. FIG. 12 is a perspective view of the circuit module 102. FIG. 13 is a perspective view showing a component holder 141 and electrical components of the circuit module 102 in a disassembled manner. In addition, the circuit module 102 has a resin molded portion 155 formed of a synthetic resin on one axial side thereof as shown in FIG. 7; however, the resin molded portion 155 is omitted from FIG. 12.

The circuit module 102 has the diode 81 and the capacitors 82 constituting the above-described resonant circuits; it also has the component holder 141, a first busbar 151 and a second busbar 152. The component holder 141 is formed of an electrically-insulative material such as a synthetic resin.

The component holder 141 has a main body portion 142 formed in an annular shape, and a plurality of conductor wire fixing portions 143 extending radially outward from the main body portion 142 in a radial fashion. The main body portion 142 has a first accommodation section 145 provided at one location in the circumferential direction, and a second accommodation section 146 that is provided along an imaginary circle centering on the central axis and passing through the first accommodation section 145 and has a substantially C-shpae in a plan view. Each of the accommodation sections 145 and 146 is formed in the shape of a recess that is open on one side of the main body portion 142. The accommodation sections 145 and 146 are component accommodation sections in which the electrical components are accommodated. Specifically, in the first accommodation section 145, there are accommodated the diode 81 and electric wires connected to the diode 81. Moreover, the diode 81 is fixed by fixing means such as a bolt. On the other hand, in the second accommodation section 146, there are accommodated the capacitors 82 in alignment with each other in the circumferential direction and the busbars 151 and 152 connected to the capacitors 82. In addition, each of the capacitors 82 has a rectangular parallelepiped or cubic shape.

The configuration for accommodating the electrical components in the second accommodation section 146 will be described in more detail. In the second accommodation section 146, there are accommodated: the first and second busbars 151 and 152 each of which has an arc shape (more particularly, a substantially C-shape); and the capacitors 82 sandwiched between the first and second busbars 151 and 152. The first and second busbars 151 and 152 are arranged in such a manner as to face each other in the axial direction. Each of the capacitors 82 has a first terminal connected to the first busbar 151 and a second terminal connected to the second busbar 152. Consequently, all the capacitors 82 are connected in parallel with each other.

The first busbar 151 is a wiring member that connects the capacitors 82 to a coil midpoint between the first coil section 71a and the second coil section 71b in the resonant circuits shown in FIG. 4. On the other hand, the second busbar 152 is a wiring member that connects the capacitors 82 to one of two ends of the second coil section 71b which is on the opposite side to the coil midpoint in the resonant circuits shown in FIG. 4.

In addition, in the second accommodation section 146, there may be accommodated, in addition to the capacitors 82 for forming the above-described resonant circuits, a capacitor for eliminating noise from the above-described resonant circuits. The capacitor may be connected in parallel with the diode 81 in FIG. 4.

The number of the conductor wire fixing portions 143 of the component holder 141 is set to be equal to the number of the main pole portions 62 of the rotor core 61. More particularly, in the present embodiment, the component holder 141 has eight conductor wire fixing portions 143 formed at equal intervals in the circumferential direction. In each of the conductor wire fixing portions 143, there are formed a plurality of insertion holes 147 penetrating the conductor wire fixing portion 143 in the axial direction. Moreover, in the insertion holes 147 of the conductor wire fixing portions 143, there are respectively inserted the conductor wire end portions 125 and 126 that extend from the respective coil bodies 121 and 123 of the coil modules 111 and 112 of the coil units 110 in the axial direction.

As shown in FIGS. 6 and 9, the conductor wire end portions 125 and 126 are led out from axial ends of the respective coil modules 111 and 112 of the coil units 110 in the rotor main body 101 and inserted into the respective insertion holes 147 of the conductor wire fixing portions 143. Moreover, each corresponding pair of the conductor wire end portions 125 are joined to each other by welding or the like; and each corresponding pair of the conductor wire end portions 126 are also joined to each other by welding or the like. Consequently, the first coil modules 111 of the coil units 110 are connected in series with each other; and the second coil modules 112 of the coil units 110 are also connected in series with each other.

In the circuit module 102, the electrical components, such as the diode 81, the capacitors 82 and the busbars 151 and 152, are accommodated in the accommodation sections 145 and 146; in this state, the synthetic resin is filled into the accommodation sections 145 and 146. Consequently, the resin molded portion 155 (see FIG. 7) is formed in the circuit module 102 to cover the electrical components constituting the above-described resonant circuits.

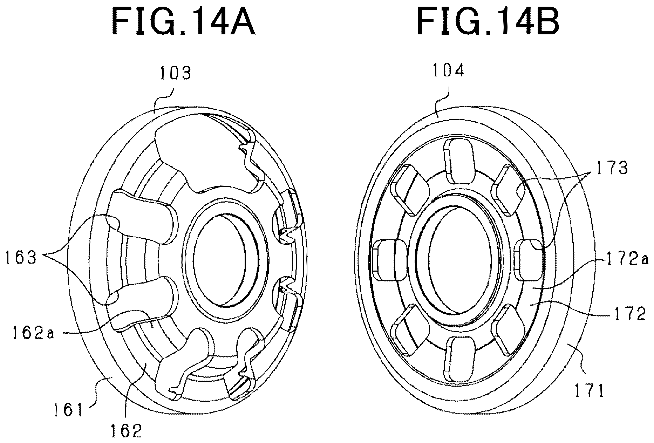

Next, the configurations of the coil end covers 103 and 104 will be described. FIGS. 14A and 14B are perspective views respectively illustrating the configurations of the coil end covers 103 and 104. The coil end cover 103 corresponds to a "first coil end cover" provided on a first axial side of the field coil 70, whereas the coil end cover 104 corresponds to a "second coil end cover" provided on a second axial side of the field coil 70. The coil end covers 103 and 104 may be formed of a nonmagnetic material such as aluminum. Alternatively, the coil end covers 103 and 104 may be formed of a synthetic resin. The configurations of the coil end covers 103 and 104 are different from each other. Hereinafter, the configuration of the coil end cover 103 will be described first.

As shown in FIG. 14A, the coil end cover 103 has an annular portion 161 that has a perfect circular shape in a front view, and an end plate portion 162 that extends radially inward from the annular portion 161. In the end plate portion 162, there are formed a plurality of openings 163 each penetrating the end plate portion 162 in the plate thickness direction. The openings 163 are formed at predetermined intervals in the circumferential direction. More particularly, in the present embodiment, the openings 163 include six smaller openings 163 that are arranged at equal intervals in the circumferential direction, and a large opening 163 whose size is substantially twice that of each of the smaller openings 163. Moreover, in the end plate portion 162, there are also formed, between the openings 163, beam portions 162a that extend in a radial fashion from the central axis side.

As shown in FIG. 6, the coil end cover 103 is provided on the first axial side of the rotor main body 101, i.e., on the circuit module 102 side of the rotor main body 101. In the state of the coil end cover 103 having been mounted to the rotor main body 101, that one of the coil end parts CE of the field coil 70 which is on the circuit module 102 side (see FIG. 8) is surrounded by the annular portion 161 of the coil end cover 103 from the radially outer side. Moreover, the coil end cover 103 is provided in such a manner as to cover the circuit module 102 from the axially outer side.

The coil end cover 103 has the openings 163 formed at the same intervals in the circumferential direction as the conductor wire fixing portions 143 of the circuit module 102; and the conductor wire fixing portions 143 are exposed to the outside in the axial direction through the openings 163. Consequently, heat dissipation from the field coil 70 through the conductor wire end portions 125 and 126 can be promoted.

Referring now to FIG. 14B, the coil end cover 104 has an annular portion 171 that has a perfect circular shape in a front view, and an end plate portion 172 that extends radially inward from the annular portion 171. In the end plate portion 172, there are formed a plurality of openings 173 each penetrating the end plate portion 172 in the axial direction. The openings 173 are formed at predetermined intervals in the circumferential direction. Moreover, in the end plate portion 172, there are also formed, between the openings 173, beam portions 172a that extend in a radial fashion from the central axis side.

As shown in FIG. 6, the coil end cover 104 is provided on the second axial side of the rotor main body 101, i.e., on the opposite side of the rotor main body 101 to the circuit module 102. In the state of the coil end cover 104 having been mounted to the rotor main body 101, that one of the coil end parts CE of the field coil 70 which is on the opposite side to the circuit module 102 (see FIG. 8) is surrounded by the annular portion 171 of the coil end cover 104 from the radially outer side.

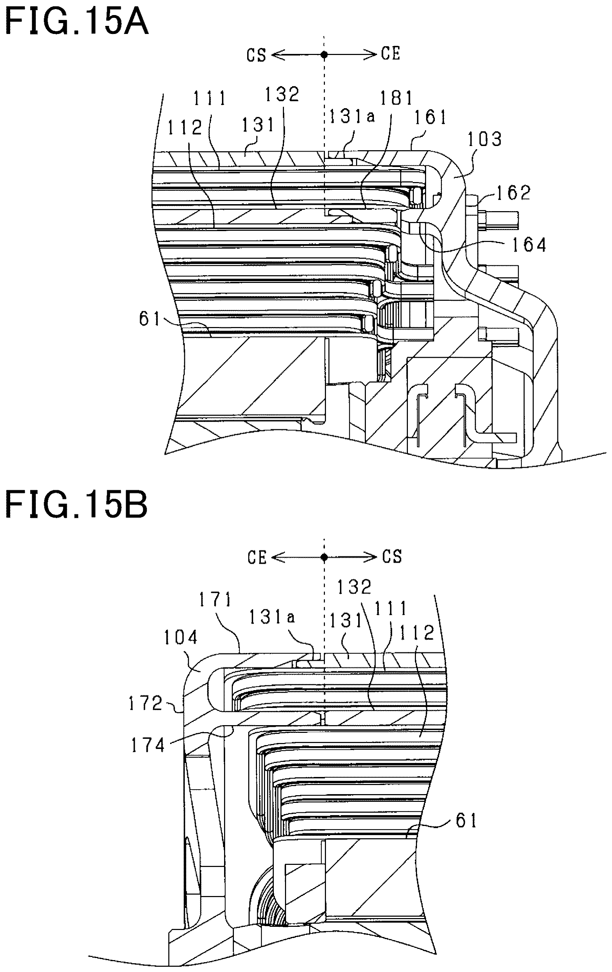

The coil end covers 103 and 104 are configured to support axial end portions of the holding plates 131 from the radially outer side by means of the annular portions 161 and 171. This configuration will be described in detail with reference to FIGS. 15A and 15B. FIG. 15A is a cross-sectional view showing, in a magnified manner, the configuration around the coil end part CE on the coil end cover 103 side. FIG. 15B is a cross-sectional view showing, in a magnified manner, the configuration around the coil end part CE on the coil end cover 104 side.

As shown in FIG. 15A, in the configuration around the coil end part CE on the coil end cover 103 side, each of the holding plates 131 has an extension portion 131a extending from the coil side part CS side to the coil end part CE side. The coil end cover 103 is mounted so that the annular portion 161 of the coil end cover 103 overlaps the extension portions 131a of the holding plates 131 from the radially outer side. Moreover, in the end plate portion 162 of the coil end cover 103, there are formed, on the radially inner side of the annular portion 161, protrusions 164 each extending axially inward (i.e., toward the field coil 70). In addition, the protrusions 164 may be formed, on the beam portions 162a of the coil end cover 103, in an arc shape so as to extend along an imaginary circle centering on the central axis of the rotor 60.

A coil end ring 181 is mounted, as an annular member separate from the coil end cover 103, between coil end parts of the first coil modules 111 and coil end parts of the second coil modules 112. In addition, the coil end ring 181 in a state of being separate from the rotor main body 101 is shown in FIG. 7.

The coil end ring 181 is arranged in a gap that is formed in the coil end part CE due to the holding plates 132 interposed between the first coil modules 111 and the second coil modules 112 in the radial direction. The annular portion 161 of the coil end cover 103 and the coil end ring 181 are located respectively at radially outer and radially inner positions overlapping each other. Moreover, the coil end ring 181 is sandwiched between the holding plates 132 and the protrusions 164 of the coil end cover 103 in the axial direction. Consequently, the axial position of the coil end ring 181 is restricted by the holding plates 132 and the coil end cover 103.

With the coil end ring 181 provided radially inside the annular portion 161 of the coil end cover 103, the centrifugal forces generated in the coil modules 111 and 112 during rotation of the rotor 60 will be distributed to two annular members (i.e., the coil end cover 103 and the coil end ring 181).

As shown in FIG. 15B, in the configuration around the coil end part CE on the coil end cover 104 side, each of the holding plates 131 has an extension portion 131a extending from the coil side part CS side to the coil end part CE side, as in the configuration shown in FIG. 15A. The coil end cover 104 is mounted so that the annular portion 171 of the coil end cover 104 overlaps the extension portions 131a of the holding plates 131 from the radially outer side. Moreover, in the end plate portion 172 of the coil end cover 104, there are formed, on the radially inner side of the annular portion 171, protrusions 174 each extending axially inward (i.e., toward the field coil 70). The protrusions 174 are inserted between coil end parts of the first coil modules 111 and coil end parts of the second coil modules 112 in the radial direction. In addition, the protrusions 174 may be formed, on the beam portions 172a of the coil end cover 104, in an arc shape so as to extend along an imaginary circle centering on the central axis of the rotor 60.

At the coil end parts of the coil modules 111 and 112, the annular portion 171 of the coil end cover 104 and the protrusions 174 are provided in a double manner in the radial direction. Consequently, the centrifugal forces generated in the coil modules 111 and 112 during rotation of the rotor 60 will be distributed to two annular members (i.e., the coil end cover 104, and the protrusions 174 as a whole).

It should be noted that on the coil end cover 103 side (i.e., on the first axial side of the rotor 60), the protrusions 164 may alternatively be configured to be inserted between the coil end parts of the first coil modules 111 and the coil end parts of the second coil modules 112 in the radial direction, as on the coil end cover 104 side (i.e., on the second axial side of the rotor 60). It also should be noted that on the coil end cover 104 side, a coil end ring 181 may be interposed between the coil end parts of the first coil modules 111 and the coil end parts of the second coil modules 112 in the radial direction, as on the coil end cover 103 side.

In the present embodiment, the coil end cover 103 is configured to function as a balance adjustment member that adjusts weight balance in the circumferential direction in the rotor 60. This configuration will be described hereinafter. Specifically, in the rotor 60 of the wound-field rotating electric machine 40 where the circuit module 102 is provided around the rotating shaft 32, there is a concern that the arrangement of the electrical components of the circuit module 102 may be uneven in the circumferential direction, causing rotational imbalance to occur during rotation of the rotor 60. Therefore, in the present embodiment, the coil end cover 103 is configured to have a rotationally asymmetric shape in the circumferential direction and thereby adjust the weight balance.

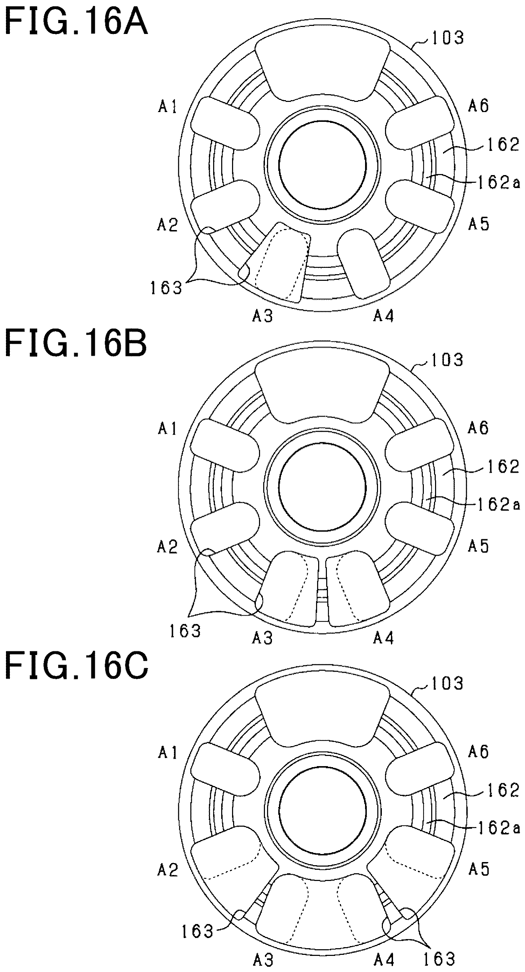

FIGS. 16A, 16B and 16C are front views illustrating configuration examples of the coil end cover 103 on which balance adjustment has been performed. In these examples, the coil end cover 103 has the same basic shape as shown in FIG. 14A; and the opening area(s) of at least one of the openings 163 is/are increased by removing part of the end plate portion 162. It should be noted that in FIGS. 16A, 16B and 16C, those six of the openings 163 which are arranged evenly in the circumferential direction before the increase in the opening area(s) of at least one of the openings 163 are respectively designated by A1 to A6; and the shape(s) of the at least one opening 163 before the increase in the opening area(s) thereof is/are shown by dashed lines.

In each of the configuration examples illustrated in FIGS. 16A, 16B and 16C, the shape of the coil end cover 103 becomes rotationally asymmetric in the circumferential direction due to the increase in the opening area(s) of at least one of the openings 163. It should be noted that: a rotationally symmetric shape denotes a shape that looks the same after rotating it about its axis by (360/n) degrees; and a rotationally asymmetric shape denotes a shape that looks different after rotating it about its axis by (360/n) degrees, where n is an integer greater than or equal to 2. In other words, a rotationally asymmetric shape of the coil end cover 103 denotes a shape that looks different after rotation of the coil end cover 103 about the central axis of the rotating electric machine 40 by any angle other than 360°. In addition, the shape of the coil end cover 103 is rotationally symmetric before part of the end plate portion 162 is removed, and becomes rotationally asymmetric after part of the end plate portion 162 is removed.

In the configuration example illustrated in FIG. 16A, the opening area of the opening A3 among the openings A1 to A6 is increased, so that the opening A3 becomes an asymmetric portion. Specifically, in this example, the weight of the coil end cover 103 is locally reduced in the vicinity of the opening A3 by removing parts of the two beam portions 162a formed respectively on opposite sides of the opening A3 in the circumferential direction. Consequently, the shape of the coil end cover 103 becomes rotationally asymmetric.

In the configuration example illustrated in FIG. 16B, the opening areas of the openings A3 and A4 among the openings A1 to A6 are increased, thereby making the shape of the coil end cover 103 rotationally asymmetric in the circumferential direction. Specifically, in this example, the weight of the coil end cover 103 is locally reduced in the vicinities of the openings A3 and A4 by removing parts of the beam portion 162a formed between the openings A3 and A4. Consequently, the shape of the coil end cover 103 becomes rotationally asymmetric.

In the configuration example illustrated in FIG. 16C, the opening areas of the openings A2 to A5 among the openings A1 to A6 are increased, thereby making the shape of the coil end cover 103 rotationally asymmetric in the circumferential direction. Specifically, in this example, the removable of part of the end plate portion 162 is performed at the beam portions 162a between the openings A2 and A3, between the openings A3 and A4 and between the openings A4 and A5. Consequently, the shape of the coil end cover 103 becomes rotationally asymmetric. In addition, in the examples illustrated in FIGS. 16A, 16B and 16C, each of those portions of the coil end cover 103 from which part of the end plate portion 162 is removed constitutes an adjustment portion where the weight of the coil end cover 103 has been reduced.

In manufacturing the rotor 60, the rotor 60 in the assembled state as shown in FIG. 6 is set to a rotation measurement device. Then, the imbalance amount and imbalance angle of the rotor 60 are measured by the rotation measurement device. Thereafter, balance adjustment is performed, by cutting or the like, at the location(s) in the rotor 60 where weight imbalance has occurred.

The coil end cover 103 is configured to enable cooling of the circuit module 102 and the like through the openings 163. Therefore, increasing the opening area(s) of at least one of the openings 163 only improves the performance of cooling the circuit module 102 and the like. Consequently, it becomes possible to adjust rotational balance of the rotor 60 without causing any adverse effects.

Alternatively, it is possible to use the coil end cover 104, which is provided on the axially opposite side to the coil end cover 103, as a balance adjustment member. In this case, the shape of the coil end cover 104 may be made rotationally asymmetric in the circumferential direction by increasing the opening area(s) of at least one of the openings 173 of the coil end cover 104.

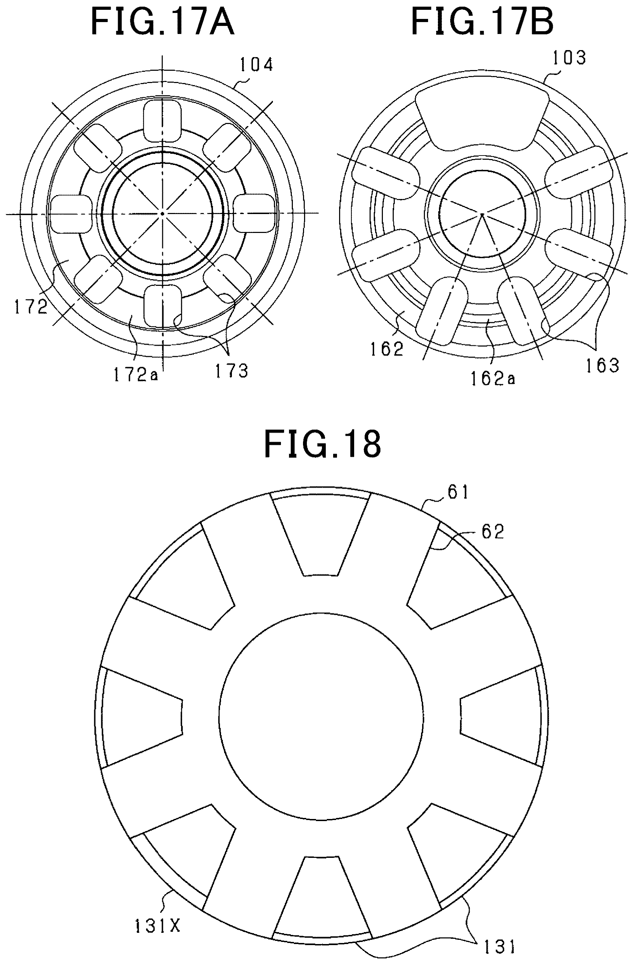

Otherwise, it is also possible to use both the coil end covers 103 and 104, which are provided respectively on the first axial side and the second axial side, as balance adjustment members. In this case, as shown in FIGS. 17A and 17B, the circumferential positions of the openings 163 formed in the coil end cover 103 may be set to be different from the circumferential positions of the openings 173 formed in the coil end cover 104. Specifically, in FIGS. 17A and 17B, the circumferential center positions of the opening 163 and 173 are indicated by one-dot chain lines. The coil end covers 103 and 104 may be configured to include the respective openings 163 and 173 having different circumferential center positions. In other words, the coil end covers 103 and 104 may be configured so that the circumferential center positions of the beam portions 162a formed between the openings 163 in the coil end cover 103 are different from the circumferential center positions of the beam portions 172a formed between the openings 173 in the coil end cover 104.

Moreover, after the measurement of the imbalance amount and imbalance angle of the rotor 60 by the rotation measurement device, it is possible to determine, based on the measured imbalance amount and imbalance angle of the rotor 60, which of the coil end covers should be subjected to balance adjustment and at what position(s) balance adjustment should be performed in the coil end cover(s) subjected to the balance adjustment. Then, it is possible to make at least one of the shapes of the coil end covers 103 and 104 rotationally asymmetric by increasing the opening area(s) of at least one of the openings 163 or 173.

Furthermore, in the coil end covers 103 and 104 provided respectively on the first and second axial sides of the field coil 70, when the circumferential positions of the openings 163 are different from those of the openings 173, the circumferential positions of the solid portions (or non-opening portions) of the end plate portion 162 are also different from those of the solid portions of the end plate portion 172. Conseuently, in reducing weight at given circumferential positions for balance adjustment, it is possible to prevent the occurrence of a situation where the weight reduction cannot be realized because both the end plate portions 162 and 172 are open at the given circumferential positions.

According to the present embodiment, it is possible to achieve the following advantageous effects.

In the rotor 60, the coil end covers 103 and 104 are provided, on the radially outer side of the coil end parts CE of the field coil 70, in such a manner as to respectively surround the coil end parts CE of the field coil 70. With this configuration, even when the centrifugal force is generated in the field coil 70 with rotation of the rotor 60, it is still possible to suppress displacement of the coil end parts CE of the field coil 70 by the coil end covers 103 and 104. As a result, the field coil 70 can be held in a proper state in the rotor 60.

The coil end covers 103 and 104 have the respective annular portions 161 and 171 respectively surrounding the radially outer peripheries of the coil end parts CE of the field coil 70, and the respective end plate portions 162 and 172 extending radially inward respectively from the annular portions 161 and 171. Moreover, in each of the end plate portions 162 and 172, there are formed a plurality of openings 163 or 173 each penetrating the end plate portion in the axial direction. With this configuration, it becomes possible to achieve reduction in the weights of the coil end covers 103 and 104 while securing the strength of maintaining the shapes of the annular portions 161 and 171 in the coil end covers 103 and 104 by the beam portions 162a formed between the openings 163 and the beam portions 172a formed between the openings 173. Consequently, it becomes possible to more properly hold the field coil 70 in the rotor 60.

Moreover, it also becomes possible to adjust weight balance in the circumferential direction in the end plate portions 162 and 172 by changing the sizes of the openings 163 and 173 formed in the end plate portions 162 and 172, i.e., by reducing weight around the openings 163 and 173. In other words, it becomes possible to use the end plate portions 162 and 172 of the coil end covers 103 and 104 as weight balance adjustment portions.

The coil end cover 103 is mounted in such a manner as to cover the circuit module 102 from the axially outer side. Consequently, it becomes possible to protect the circuit module 102 by the coil end cover 103 while allowing ventilation to be performed around the coil end part CE of the field coil 70 and the circuit module 102 through the openings 163 of the coil end cover 103 and thereby enabling heat dissipation from the coil end part CE and the like.

The circuit module 102 has the conductor wire fixing portions 143 to which the conductor wire end portions 125 and 126 of the coil units 110 (more specifically, of the coil bodies 121 and 123) are fixed; and the conductor wire fixing portions 143 are exposed to the outside in the axial direction through the openings 163 formed in the end plate portion 162. Consequently, it becomes possible to enable heat dissipation from the field coil 70 through the conductor wire end portions 125 and 126.

Each of the holding plates 131 is mounted between a circumferentially-adjacent pair of the main pole portions 62 of the rotor core 61; and the holding plates 131 hold the coil side part CS of the field coil 70 from the radially outer side. Moreover, axial end portions of the holding plates 131 are supported from the radially outer side by the annular portions 161 and 171 of the coil end covers 103 and 104. Consequently, it becomes possible to suitably suppress detachment of the holding plates 131 from the rotor core 61 while suppressing radially outward displacement of the field coil 70 at the coil end parts CE and the coil side part CS.

The field coil 70 has the first coil modules 111 (i.e., the first coil section 71a) on the radially outer side and the second coil modules 112 (i.e., the second coil section 71b) on the radially inner side. Moreover, the protrusions 174 of the coil end cover 104 are inserted between coil end parts of the first coil modules 111 and coil end parts of the second coil modules 112 in the radial direction. Consequently, it becomes possible to allow the centrifugal forces generated in the first coil modules 111 and the second coil modules 112 to be distributed to and received by the annular portion 171 and the protrusions 174 of the coil end cover 104, thereby enhancing the effect of suppressing displacement of the field coil 70.

The protrusions 174 are interposed between the first coil modules 111 and the second coil modules 112 at the coil end part CE of the field coil 70; and the holding plates 132 are interposed between the first coil modules 111 and the second coil modules 112 at the coil side part CS of the field coil 70. Consequently, it becomes possible to hold the radially outer and radially inner coil modules 111 and 112 in a proper state at both the coil end part CE and the coil side part CS.

The coil end ring 181 is mounted between a coil end part of the first coil section 71a and a coil end part of the second coil section 71b in the radial direction. Consequently, it becomes possible to allow the centrifugal forces generated in the first and second coil sections 71a and 71b to be distributed to and received by two annular members (i.e., the coil end cover 103 and the coil end ring 181), thereby enhancing the effect of suppressing displacement of the field coil 70.

The coil end ring 181 is provided, between the holding plates 132 and the end plate portion 162 (more specifically, the protrusions 164 of the end plate portion 162) of the coil end cover 103, in such a manner as to be restricted in position in the axial direction; each of the holding plates 132 is mounted between a circumferentially-adjacent pair of the main pole portions 62 of the rotor core 61. Consequently, it becomes possible to suppress displacement of the coil end ring 181 in the axial direction.

Insulating layers (i.e., the insulators 122a) are interposed between the coil end parts CE of the field coil 70 and the coil end covers 103 and 104. Consequently, it becomes possible to secure electrical insulation between the coil end parts CE of the field coil 70 and the coil end covers 103 and 104.

The coil end covers 103 and 104 are formed of a nonmagnetic material. Consequently, it becomes possible to reduce eddy current loss due to the magnetic flux from the stator coil 52. Moreover, it also becomes possible to reduce the inertia and weight of the rotor 60.

In the rotor 60, the coil end covers 103 and 104 provided at the axial ends of the field coil 70 are used as the balance adjustment members; and at least part of each of the coil end covers 103 and 104 in the circumferential direction constitutes the adjustment portion(s) where the weight of the coil end cover has been reduced or increased. As a result, it becomes possible to realize proper rotation of the rotor 60 that rotates together with the circuit module 102.

Each of the coil end covers 103 and 104 is formed into a rotationally asymmetric shape by removing at least part of the coil end cover at the adjustment portion(s). Consequently, it becomes possible to suitably eliminate rotational imbalance of the rotor 60 without adding any additional members.

In each of the coil end covers 103 and 104, at least one of the annular portion 161 or 171 and the end plate portion 162 or 172 is configured to have a rotationally asymmetric shape in the circumferential direction. In this case, each of the coil end covers 103 and 104 is given the rotationally asymmetric shape by removing part of the at least one of the annular portion 161 or 171 and the end plate portion 162 or 172. Consequently, it becomes possible to realize desired balance adjustment.

Each of the coil end covers 103 and 104 is given the rotationally asymmetric shape by increasing the opening area(s) of at least one of the openings 163 or 173 formed in the end plate portion 162 or 172 of the coil end cover. Consequently, it becomes possible to realize proper balance adjustment while securing the strength of holding the coil end parts CE of the field coil 70 by the annular portions 161 and 171 of the coil end covers 103 and 104.

In particular, the coil end cover 103 is configured to enable cooling of the circuit module 102 and the like through the openings 163. Therefore, increasing the opening area(s) of at least one of the openings 163 only improves the performance of cooling the circuit module 102 and the like. Consequently, it becomes possible to adjust rotational balance of the rotor 60 without causing any adverse effects.

In the coil end covers 103 and 104 provided respectively on the first and second axial sides of the field coil 70, the circumferential positions of the openings 163 formed in the coil end cover 103 are different from the circumferential positions of the openings 173 formed in the coil end cover 104. More specifically, the circumferential center positions of the openings 163 are different from the circumferential center positions of the openings 173. Therefore, the circumferential positions of the solid portions (or non-opening portions) of the end plate portion 162 are also different from the circumferential positions of the solid portions of the end plate portion 172. Consequently, in reducing weight at given circumferential positions for balance adjustment, it is possible to prevent the occurrence of a situation where the weight reduction cannot be realized because both the end plate portions 162 and 172 are open at the given circumferential positions.

(Other Embodiments)

The above-described embodiment may be modified, for example, as follows.

In the rotor 60, in addition to the coil end covers 103 and 104, the holding plates 131 provided between the main pole portions 62 of the rotor core 61 may also be used as balance adjustment members. In this case, the holding plates 131 aligned in the circumferential direction may include those having different weights. Specifically, as shown in FIG. 18, at least one of the holding plates 131 (e.g., the holding plate 131X shown in the figure) may be configured to have a thickness different from (e.g., greater than) those of the other holding plates 131, thereby having a different weight from the other holding plates 131. Otherwise, a specific holding plate 131 may have a slit or hole formed therein, thereby having a different weight from the other holding plates 131. Alternatively, a specific holding plate 131 may be formed of a different material from the other holding plates 131, thereby having a different weight from the other holding plates 131.

As described above, at least one of the holding plates 131 aligned in the circumferential direction (e.g., the holding plate 131X shown in FIG. 18) may be configured to have a different weight from the other holding plates 131. In this case, rotational balance of the rotor 60 can be adjusted through both weight adjustment at the coil end parts CE of the field coil 70 and weight adjustment at the coil side part CS of the field coil 70.

In the rotor 60, it is possible to employ both or either of a configuration in which the coil end covers 103 and 104 are used as balance adjustment members and a configuration in which the holding plates 131 are used as balance adjustment members.

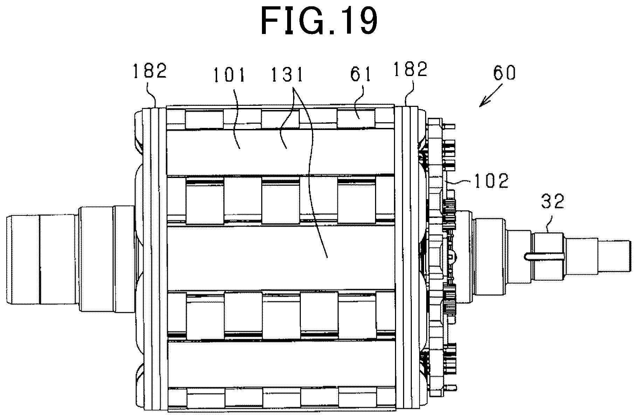

As shown in FIG. 19, in the rotor 60, tape-like or string-like wound members 182 may be wound as annular members around the radially outer peripheries of the coil end parts CE of the field coil 70 (i.e., the coil units 110). The wound members 182 may be formed of an electrically-insulative material. Specifically, the wound members 182 may be formed of resin tapes such as CFRP (Carbon Fiber Reinforced Plastic) tapes or GFRP (Glass Fiber Reinforced Plastic) tapes. With the wound members 182, it is also possible to suppress radially outward displacement of the coil end parts CE of the field coil 70 due to the centrifugal force.

In addition, the wound members 182 may be provided instead of the coil end covers 103 and 104. Otherwise, it is possible to provide the coil end cover 103 on the first axial side (i.e., on the circuit module 102 side) of the field coil 70 and a wound member 182 on the second axial side of the field coil 70.

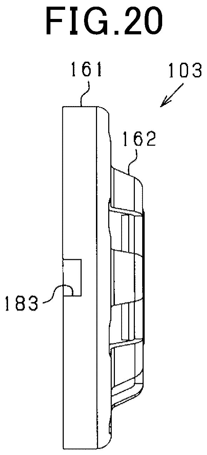

In the coil end cover 103 of the rotor 60, the annular portion 161 may be formed into a rotationally asymmetric shape by removing at least part of the annular portion 161. For example, as shown in FIG. 20, a cut 183 (e.g., a slit or hole) may be formed in a specific part (or target part for balance adjustment) of the annular portion 161 in the circumferential direction. In this case, the specific part where the cut 183 is formed corresponds to an adjustment portion where the weight of the coil end cover 103 has been reduced. It should be noted that the coil end cover 103 may have both part of the end plate portion 162 and part of the annular portion 161 removed. The same applies to the coil end cover 104.

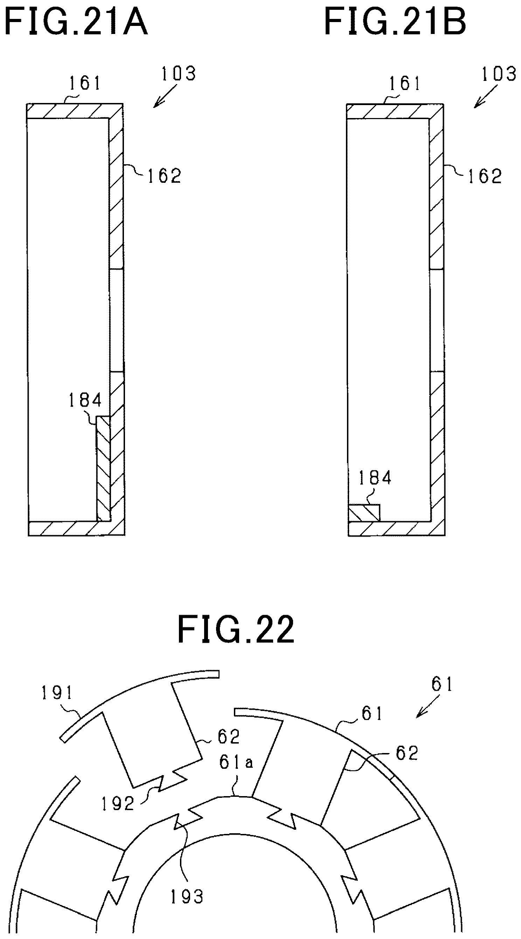

The coil end cover 103 may have a weight member fixed to at least one of the annular portion 161 and the end plate portion 162. Specifically, as shown in FIG. 21A, a weight member 184 may be mounted to a specific part (or target part for balance adjustment) of the annular portion 161 of the coil end cover 103 in the circumferential direction. Alternatively, as shown in FIG. 21B, a weight member 184 may be mounted to a specific part (or target part for balance adjustment) of the end plate portion 162 of the coil end cover 103 in the circumferential direction. Otherwise, weight members may be mounted to both the annular portion 161 and the end plate portion 162. In these cases, each of those parts to which a weight member 184 is mounted corresponds to an adjustment portion where the weight of the coil end cover 103 has been increased. The same applies to the coil end cover 104. Consequently, it would become possible to suitably eliminate rotational imbalance of the rotor 60.

It is also possible to have part of at least one of the coil end covers 103 and 104 removed while having a weight member mounted to at least one of the coil end covers 103 and 104.

As shown in FIG. 22, in the rotor core 61, the cylindrical portion 61a and the main pole portions 62 may be formed separately from each other; and at distal ends (i.e., radially outer ends) of the main pole portions 62, there may be integrally formed holding parts for holding the coil end parts CE of the field coil 70 from the radially outer side. Specifically, each of the main pole portions 62 may have a pair of flange-shaped holding parts 191 formed at its distal end on the radially outer side and a protrusion 192 formed at its proximal end on the radially inner side. On the other hand, in the cylindrical portion 61a, there may be formed recesses 193 that open radially outward. Moreover, the protrusions 192 of the main pole portions 62 may be inserted respectively into the recesses 193 of the cylindrical portion 61a to form the rotor core 61. In this case, in a state of the field coil 70 having been wound on the main pole portions 62, the coil side part CS of the field coil 70 would be held by the holding parts 191 from the radially outer side. Consequently, it would become possible to suppress radially outward displacement of the coil side part CS of the field coil 70 due to the centrifugal force.

The capacitors 82 constituting the above-described resonant circuits may be connected in parallel with the first coil section 71a of the field coil 70 instead of with the second coil section 71b of the field coil 70. Moreover, in the resonant circuits, of the first and second coil sections 71a and 71b that are connected in series with each other, the first coil section 71a may be connected with the anode of the diode 81 and the second coil section 71b may be connected with the cathode of the diode 81.

In the rotor 60, the second coil section 71b may be arranged on the radially outer side (i.e., on the stator 50 side) of the first coil section 71a.

The configuration for causing field current to flow in the field coil 70 is not limited to the electric circuit shown in FIG. 4. Alternatively, a configuration may be employed which includes brushes electrically connected to the field coil and an electric power source electrically connected to the brushes. In this case, in a state of the rotor 60 rotating at high speed, the control device 30 can control the field current flowing through the field coil by increasing the output voltage of the electric power source electrically connected to the brushes. In addition, in this case, it is unnecessary to apply harmonic current for inducing field current in the field coil to the stator coil.

In the stator 50, the stator core 51 may be configured as a toothless stator core having no teeth formed therein.

The rotating electric machine 40 is not limited to a rotating electric machine used as an in-vehicle main machine. For example, the rotating electric machine 40 may be an ISG (Integrated Starter Generator) that serves both as an electric motor and as an electric generator.

The mobile object in which the rotating electric machine system is installed is not limited to a vehicle, but may alternatively be, for example, an aircraft or a ship. Moreover, the rotating electrical machine system is not limited to a system installed in a mobile object, but may alternatively be a stationary system.

Technical ideas derived from the above-described embodiments will be described below.

[First Configuration]

A wound-field rotor (60) applicable to a wound-field rotating electric machine (40), the wound-field rotor comprising:

a rotor core (61) having main pole portions (62) provided respectively for magnetic poles aligned in a circumferential direction, each of the main pole portions protruding in a radial direction; and
a field coil (70) wound on the main pole portions of the rotor core,
wherein
the field coil has a coil end part (CE) located axially outside the rotor core, and
an annular member (103, 104, 182) is provided, on a radially outer side of the coil end part, in such a manner as to surround the coil end part.

[Second Configuration]

The wound-field rotor according to the first configuration, wherein

the annular member has an annular portion (161, 171) surrounding a radially outer periphery of the coil end part, and an end plate portion (162, 172) extending radially inward from the annular portion, and
in the end plate portion, there are formed a plurality of openings (163, 173) each penetrating the end plate portion in an axial direction.

[Third Configuration]

The wound-field rotor according to the second configuration, wherein

a circuit module (102) is fixed, at an axial end of the rotor core, to a rotating shaft (32) and electrically connected with the field coil, and
the annular member is provided in such a manner as to cover the circuit module from an axially outer side of the circuit module.

[Fourth Configuration]

The wound-field rotor according to the third configuration, wherein

the field coil has coil units (110) mounted respectively to the main pole portions of the rotor core,
the circuit module has a plurality of conductor wire fixing portions (143) to which conductor wire end portions (125, 126) extending axially outward from the coil units are fixed, and

the conductor wire fixing portions are exposed to an outside in the axial direction through the openings formed in the end plate portion.

[Fifth Configuration]

The wound-field rotor according to any one of the second to fourth configurations, further comprising holding members (131) each of which is mounted between a circumferentially-adjacent pair of the main pole portions of the rotor core, the holding members holding a coil side part (CS) of the field coil from a radially outer side of the coil side part, the coil side part radially facing the rotor core, wherein

axial end portions of the holding members are supported from a radially outer side thereof by the annular portion.

[Sixth Configuration]

The wound-field rotor according to any one of the second to fifth configurations, wherein

the field coil includes a first coil section (71a) and a second coil section (71b) that are wound respectively on a radially outer side and a radially inner side on each of the main pole portions of the rotor core, in the end plate portion of the annular member, there is formed, on a radially inner side of the annular portion, a protrusion (164, 174) extending toward the field coil, and
the protrusion is inserted between a coil end part of the first coil section and a coil end part of the second coil section in the radial direction.

[Seventh Configuration]

The wound-field rotor according to the sixth configuration, further comprising intermediate holding members (132) each of which is mounted between a circumferentially-adjacent pair of the main pole portions of the rotor core and radially between the first and second coil sections, the intermediate holding members holding a coil side part of the second coil section from a radially outer side of the coil side part, wherein

the protrusion is interposed between the first and second coil sections at the coil end part of the field coil, and
the intermediate holding members are interposed between the first and second coil sections at a coil side part (CS) of the field coil.

[Eighth Configuration]

The wound-field rotor according to any one of the second to seventh configurations, wherein

the field coil includes a first coil section (71a) and a second coil section (71b) that are wound respectively on a radially outer side and a radially inner side on each of the main pole portions of the rotor core, the annular member is a first annular member, and a second annular member (181), which is different from the first annular member, is mounted between a coil end part of the first coil section and a coil end part of the second coil section in the radial direction.

[Ninth Configuration]

The wound-field rotor according to the eighth configuration, further comprising intermediate holding members (132) each of which is mounted between a circumferentially-adjacent pair of the main pole portions of the rotor core and radially between the first and second coil sections, the intermediate holding members holding a coil side part of the second coil section from a radially outer side of the coil side part, wherein the second annular member is provided, between the intermediate holding members and the end plate portion of the first annular member, in such a manner as to be restricted in position in the axial direction.

[Tenth Configuration]

The wound-field rotor according to any one of the first to ninth configurations, wherein an insulating layer is interposed between the coil end part of the field coil and the annular member.

[Eleventh Configuration]

The wound-field rotor according to any one of the first to tenth configurations, wherein a tape-like or string-like wound member (182) is wound, as the annular member, around a radially outer periphery of the coil end part.

While the present disclosure has been described pursuant to the above embodiments, it should be appreciated that the present disclosure is not limited to the embodiments and the structures. Instead, the present disclosure encompasses various modifications and changes within equivalent ranges. In addition, various combinations and modes are also included in the category and the scope of technical idea of the present disclosure.

**Claims**

1. A wound-field rotor (60) applicable to a wound-field rotating electric machine (40), the wound-field rotor comprising:

   a rotor core (61) having main pole portions (62) provided respectively for magnetic poles aligned in a circumferential direction, each of the main pole portions protruding in a radial direction; and
a field coil (70) wound on the main pole portions of the rotor core,
wherein
the field coil has a coil end part (CE) located axially outside the rotor core, and
an annular member (103, 104, 182) is provided, on a radially outer side of the coil end part, in such a manner as to surround the coil end part.

2. The wound-field rotor as set forth in Claim 1, wherein

   the annular member has an annular portion (161, 171) surrounding a radially outer periphery of the coil end part, and an end plate portion (162, 172) extending radially inward from the annular portion, and
   in the end plate portion, there are formed a plurality of openings (163, 173) each penetrating the end plate portion in an axial direction.

3. The wound-field rotor as set forth in Claim 2, wherein

   a circuit module (102) is fixed, at an axial end of the rotor core, to a rotating shaft (32) and electrically connected with the field coil, and
   the annular member is provided in such a manner as to cover the circuit module from an axially outer side of the circuit module.

4. The wound-field rotor as set forth in Claim 3, wherein

   the field coil has coil units (110) mounted respectively to the main pole portions of the rotor core,
   the circuit module has a plurality of conductor wire fixing portions (143) to which conductor wire end portions (125, 126) extending axially outward from the coil units are fixed, and
   the conductor wire fixing portions are exposed to an outside in the axial direction through the openings formed in the end plate portion.

5. The wound-field rotor as set forth in any one of Claims 2 to 4, further comprising holding members (131) each of which is mounted between a circumferentially-adjacent pair of the main pole portions of the rotor core, the holding members holding a coil side part (CS) of the field coil from a radially outer side of the coil side part, the coil side part radially facing the rotor core, wherein axial end portions of the holding members are supported from a radially outer side thereof by the annular portion.

6. The wound-field rotor as set forth in any one of Claims 2 to 4, wherein

29 EP 4 672 565 A1 30

the field coil includes a first coil section (71a) and a second coil section (71b) that are wound respectively on a radially outer side and a radially inner side on each of the main pole portions of the rotor core,
in the end plate portion of the annular member, there is formed, on a radially inner side of the annular portion, a protrusion (164, 174) extending toward the field coil, and
the protrusion is inserted between a coil end part of the first coil section and a coil end part of the second coil section in the radial direction.

7. The wound-field rotor as set forth in Claim 6, further comprising intermediate holding members (132) each of which is mounted between a circumferentially-adjacent pair of the main pole portions of the rotor core and radially between the first and second coil sections, the intermediate holding members holding a coil side part of the second coil section from a radially outer side of the coil side part, wherein

the protrusion is interposed between the first and second coil sections at the coil end part of the field coil, and
the intermediate holding members are interposed between the first and second coil sections at a coil side part (CS) of the field coil.

8. The wound-field rotor as set forth in any one of Claims 2 to 4, wherein

the field coil includes a first coil section (71a) and a second coil section (71b) that are wound respectively on a radially outer side and a radially inner side on each of the main pole portions of the rotor core,
the annular member is a first annular member, and
a second annular member (181), which is different from the first annular member, is mounted between a coil end part of the first coil section and a coil end part of the second coil section in the radial direction.

9. The wound-field rotor as set forth in Claim 8, further comprising intermediate holding members (132) each of which is mounted between a circumferentially-adjacent pair of the main pole portions of the rotor core and radially between the first and second coil sections, the intermediate holding members holding a coil side part of the second coil section from a radially outer side of the coil side part, wherein the second annular member is provided, between the intermediate holding members and the end plate portion of the first annular member, in such a manner as to be restricted in position in the axial direction.

10. The wound-field rotor as set forth in Claim 1, wherein an insulating layer is interposed between the coil end part of the field coil and the annular member.

11. The wound-field rotor as set forth in Claim 1, wherein a tape-like or string-like wound member (182) is wound, as the annular member, around a radially outer periphery of the coil end part.

# FIG.1

# FIG.2

# FIG.3

# FIG.4

$$\cdot f1 = \frac{1}{2\pi\sqrt{L1 \times C}}$$

$$\cdot f2 = \frac{1}{2\pi\sqrt{L2 \times C}}$$

# FIG.5

(a) FUNDAMENTAL CURRENT

(b) HARMONIC CURRENT

0                                    360 [deg]

# FIG.6

# FIG.7

EP 4 672 565 A1

# FIG.8

FIG.9

FIG.10B

FIG.10A

# FIG.11A

# FIG.11B

# FIG.12

# FIG.13

# FIG.14A

103

163

162a

161

162

# FIG.14B

104

173

172a

172

171

## FIG.15A

CS ←——•——→ CE

112 111 131 132 131a 181 161 103

61

162

164

## FIG.15B

CE ←——•——→ CS

171 131a 132 131 111 112

104

172

174

61

## FIG.16A

## FIG.16B

## FIG.16C

# FIG.17A

104
172
172a    173

# FIG.17B

103
162
162a    163

# FIG.18

61
62
131X
131

# FIG.19

# FIG.20

# FIG.21A

# FIG.21B

FIG.22

## INTERNATIONAL SEARCH REPORT

| International application No. |
| --- |
| **PCT/JP2024/003298** |

### A. CLASSIFICATION OF SUBJECT MATTER

*H02K 3/52*(2006.01)i; *H02K 3/487*(2006.01)i
FI:  H02K3/52 F; H02K3/487 Z

According to International Patent Classification (IPC) or to both national classification and IPC

### B. FIELDS SEARCHED

Minimum documentation searched (classification system followed by classification symbols)

H02K3/52; H02K3/487

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| X | US 2017/0353092 A1 (HYUNDAI MOTOR COMPANY) 07 December 2017 (2017-12-07) paragraphs [0048]-[0098], fig. 1-5 | 1-2, 5, 10 |
| Y | paragraphs [0048]-[0098], fig. 1-5 | 3 |
| Y | JP 2020-124100 A (DENSO CORP.) 13 August 2020 (2020-08-13) paragraphs [0051]-[0057], fig. 13-15 | 3 |
| X | Microfilm of the specification and drawings annexed to the request of Japanese Utility Model Application No. 61312/1988 (Laid-open No. 166447/1989) (MITSUBISHI ELECTRIC CORPORATION) 21 November 1989 (1989-11-21), specification, page 1, line 16 to page 2, line 6, fig. 3, 4 | 1, 10, 11 |
| A | JP 54-709 A (SUNDSTRAND CORP.) 06 January 1979 (1979-01-06) | 1-11 |
| A | JP 2020-54157 A (DENSO CORP.) 02 April 2020 (2020-04-02) | 1-11 |
| A | JP 2001-186730 A (HITACHI, LTD.) 06 July 2001 (2001-07-06) | 1-11 |

☑ Further documents are listed in the continuation of Box C.     ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **19 February 2024** | **12 March 2024** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (July 2022)

**INTERNATIONAL SEARCH REPORT**

International application No.

**PCT/JP2024/003298**

### C. DOCUMENTS CONSIDERED TO BE RELEVANT

| Category* | Citation of document, with indication, where appropriate, of the relevant passages | Relevant to claim No. |
|---|---|---|
| A | Microfilm of the specification and drawings annexed to the request of Japanese Utility Model Application No. 50505/1982 (Laid-open No. 153571/1983) (NIPPON SHARYO, LTD.) 14 October 1983 (1983-10-14) | 1-11 |

Form PCT/ISA/210 (second sheet) (July 2022)

**INTERNATIONAL SEARCH REPORT**
Information on patent family members

International application No.

**PCT/JP2024/003298**

| Patent document cited in search report | | | Publication date (day/month/year) | Patent family member(s) | | | Publication date (day/month/year) |
|---|---|---|---|---|---|---|---|
| US | 2017/0353092 | A1 | 07 December 2017 | KR 10-2017-0137438 | | A | |
| | | | | CN 107465321 | | A | |
| JP | 2020-124100 | A | 13 August 2020 | US 2020/0251940 | | A1 | |
| | | | | paragraphs [0075]-[0081], fig. 13-15 | | | |
| JP | 1-166447 | U1 | 21 November 1989 | (Family: none) | | | |
| JP | 54-709 | A | 06 January 1979 | US 4147946 | | A | |
| | | | | GB 1598135 | | A | |
| JP | 2020-54157 | A | 02 April 2020 | US 2021/0226489 | | A1 | |
| | | | | CN 112789787 | | A | |
| JP | 2001-186730 | A | 06 July 2001 | (Family: none) | | | |
| JP | 58-153571 | U1 | 14 October 1983 | (Family: none) | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2023025394 A
- JP 5062517 B